# EUROPEAN PATENT APPLICATION

(11) **EP 2 784 676 A1**
(43) Date of publication of application: **01.10.2014**
(21) Application number: 13380011.0
(22) Date of filing: 28.03.2013
(51) Int. Cl.: G06F 11/07, G06F 11/32, G05B 23/02

(54) **DIMA extension health monitor supervisor**

(71) Applicant: EUROCOPTER ESPAÑA, S.A., Albacete (ES)
(72) Inventor: Esparcia Perez, Antonio, ES-02400 Hellin, Albacete (ES); Catalan Alarcón, José Antonio, ES-02006 Albacete (ES)
(74) Representative: GPI & Associés

(57) **Abstract**

In an aircraft (1), a distributed architecture compliant to the specification ARINC653 forms a DIMA (3) with Partitions (5) in hardware Modules (6), where shared memories (13) are mapped with shared I/O memory (11).

For detecting / treating errors at various Levels in the DIMA (3) a superintending RTOS extension of existing Health Monitor Units (HMU) in the Modules (6) is run as a Health Monitor Supervisor (HMS).

The invention allows communicating all the existing Health Monitor Units (HMU), thus providing global errors visibility, shared recovery actions and smooth fault treatment.

## Description

The general technical field of the invention relates to aircrafts. For instance, the invention is useful to rotary wing aircrafts like helicopters. The invention relates specifically to airborne computing systems.

In aircrafts, some airborne computing systems also operate so called Integrated Modular Avionics (IMA). IMAs enable multiple software applications, often of different safety criticality levels, to execute safely on a shared hardware platform. This allows reducing the system's overall space, weight, and power requirements.

Among IMAs, so-called Distributed Integrated Modular Avionics (DIMA) refers to an architecture having distributed hosts connected in a safety-critical manner for communication.

Typically, an IMA / DIMA include Cabinets, Modules, Partitions and subprocesses. Cabinets are physical structures (e.g. processing boards like Line Replacable Units or LRU) providing an environmental barrier and memory means / processing means. In each Cabinet, memory means / processing means are allocated to hardware components called Modules. Modules are connected each others via physical communication means.

In Modules, an underlying Real-Time Operating System (RTOS) provides common services for small software units called Partitions. Partitions are independent one from another, in execution and memory management.

Finally, Partitions are managing various subprocesses like "Threads". According to ARINC653 specification, such "Threats" are called "process(es)".

There are usually defined three (3) distinct working levels in a DIMA, notwithstanding the RTOS: a Low Threats Level (LTL) where subprocesses are operated, a Medium Partition Level (MPL) and a High Module Level (HML).

For software compatibility among safety-critical avionics, a standard called ARINC653 is widely used in Integrated Modular Avionics (IMA). In a DIMA as per ARINC653, the RTOS is executing a so-called Health Monitor Unit (HMU).

Known HMUs are responsible for monitoring and reporting faults and failures in the hardware, applications, and operating system. This being told, examples of existing HMUs are discussed.

For instance, the document "WindRiver VXworks 653 Platform 2.3" (online at: http://www.windriver.com/products/product-notes/PN VE 653 Platform2 3 0410.pdf), refers to such a classical HMU. This Platform describes a: software Development Suite, Middleware and pending Operating System (OS).

This document describes a Health Monitor i.e. a classical HMU as per ARINC653. This HMU is responsible for monitoring and reporting faults and failures. The HMU provides a framework to raise and handle events in a system, which can be alarms or notifications. Alarms are injected to represent faults in the system. The alarms have handlers to perform health recovery actions. The HMU implements also the optional hierarchical structure and response capability specified in the ARINC653. The Platform provides a process-, partition-, and module-level health monitor, including both cold and warm restarts at partition and module level.

In addition to dispatching events, the HMU dispatch notifications, which are messages that a health event has occurred. These messages can be used to handle any impact that the occurrence of an event in one partition may have on other partitions.

As part of the functionality, the Platform provides logging capability. The health logs are used to record events that could impact the stability of applications in the system. The module OS, as well as each partition, has a separate safety log into which events can be injected. Event injection can be configured to occur automatically or as needed by each event handler. Examples of events include hardware-generated exceptions, error paths in the code, and crossed thresholds. The sizes of logs, their access rights, and their default policies are all managed in the Platform system configuration.

No known document describe a DIMA with a superintending health monitoring. Otherway speaking, none of the studied documents allows an overseing detection of errors in a DIMA, providing a global visibility of errors, shared recovery actions and optimized errors treatment.

Besides, some inherent technical problems sometimes impair DIMAs involving classical HMUs.

A current HMU is not capable of treating errors at levels higher than the level where this error occurred, though such errors may propagate to a higher level. Though this aims to isolate faults, recovery actions are limited to the faulty level only. For instance, errors happening in a faulty Module may impact e.g. the hosting Cabinet. A classical HMU is therefore not helping regarding such errors in the whole hosting Cabinet.

With such a current HMU, an error in a faulty structure (Cabinet, Module, Partition, subprocess) at a given level is managed only in this faulty given structure, independently from the other similar structures at the same level. Thus, one HMU action carried out in said faulty structure is transparent to the other similar structures at the same level. This aims to prevent failures from propagating.

Also, though a current HMU is responsible for reporting faults to a central aircraft maintenance and display function, no global view is available onboard of what is happening in the complete system. Indeed, when a classical HMU is provided in a DIMA, with display and maintainance functions, such functions are operated outside the aircraft equipped with the DIMA, e.g. via a remote maintainance station outside the aircraft, such as a "Retail & Maintainance Operation (acronym: RMO)" ground facility.

Lacking of overall system errors knowledge, implementation of optimized fault tolerance mechanisms happens to be difficult in a modular approach.

Redundancy implies hardware duplication, thus increasing costs for the system. This also makes reconfiguration more expensive.

The invention is defined in the appending claims.

An object of the invention is a Health Monitor Supervising (HMS) method for a Distributed Integrated Modular Avionics or DIMA onboard an aircraft. The DIMA is having a plurality of equipments. The method is executed through automated processing steps / stages / phases / actions with the aid of a computer system. The DIMA is having at least: Cabinets, Modules, Partitions and Threats subprocesses. The Cabinets are connected by physical communication means. Each Cabinet is having distributed processing means and memory means. An underlying Real-Time Operating System or RTOS is installed in each Module to provide common services from distributed processing means and memory means to independent Partitions. The RTOS is having a Health Monitor Unit or HMU. The HMU is allocated to each Module for: a detection step of detecting errors in the computer system; an allocation step of allocating at least one corresponding responsive action predetermined in Health Monitoring Tables; and a performing step of executing by the HMU the corresponding responsive action. The Method proposes that: a Health Monitoring Supervising step is executed by a Health Monitoring Supervisor or HMS implemented in each Module and is allocated at RTOS level. The Health Monitoring Supervisor is executing at least:
- a local information collecting stage from the RTOS, Cabinets, Modules and Threats subprocesses, by the HMS;
- a external information capture stage from equipments aboard the aircraft, by the HMS;
- a local information / external information treatment stage, by the HMS, for calculating relevant health monitoring information based upon the collected information;
- a transmitting stage of passing from the HMS the relevant health monitoring information to at least one local HMU of a local Module; and
- based upon the transmited relevant information, the performing step is executing by the local HMU, at least one responsive action.

In an embodiment, the method comprises, during the transmitting stage, a communicating phase of connecting the HMS with a plurality of local HMUs, via the Physical Communication means.

In an embodiment, the method comprises after the transmitting step of relevant information to local Modules, a stage of recording the relevant information in memory means allocated to the local Module where the local HMU is executing the performing step.

In an embodiment, the method comprises that the performing step is executing recovery actions in at least one of: RTOS, Cabinet, Module and Threat subprocess, in the Computer system.

In an embodiment, the method comprises that the performing step includes an information phase of announcing by the HMS, outside the local Module, to at least one RTOS, Cabinet, Module and Threat subprocess, in the Computer system, of the performing step in the local Module

In an embodiment, the method comprises that the performing step is executing in the local Module, at least one recovery action of:
- Module shutdown action of the local Module with an information phase of announcing by the HMS, to at least one other Module in the Computer system, of the shutdown of the local Module;
- Restoring launch action of the local Module; and
- Back-up recording action of recording at least one Partition of the Computer System, in at least one memory means allocated to each local Module where the performing step is executed.

In an embodiment, the method comprises that the performing step is executing at least one recovery action in another Module than the local Module.

For instance, the method comprises that the performing step is executing at least one recovery action in another Module than the local Module, including a partition stop action / partition launching transfer action to at least one distinct partition, of at least one task previously operated by a stopped partition having been submitted to a partition stop action.

Another object of the invention is a computer system having a distributed architecture of DIMA onboard an aircraft and the DIMA has a HMU compliant to the ARINC653 specification dedicated for executing the method above according to the invention..

Another object of the invention is an aircraft having onboard a computer system dedicated for executing the above method according to the invention, said aircraft being a rotary wing aircraft.

Summarizing the invention against the background art, the invention allows the RTOS of a DIMA, to be provided with a Health Monitor Supervisor (HMS) capable to superintend detecting / treating errors possibly occurring at various levels (HML, MPL, and LTL). This would allow both both level-to-level and level-to-above handling of errors, thus making optimized dispatch of actions possible upwards and in parallel, when useful. Broad surveillance of errors makes synthetic and ergonomic display and maintenance functions. Faul tolerance is optimized and made easier to implement. This also widens the possibilities of redundancy and reconfiguration at a lower cost.

The invention and some advantages thereof are detailed from the following specification of exemplifying embodiments which refers to the accompanying figures, in which:
Figure 1 is a schematic elevation side view of an example of aircraft of the rotary wing type, equipped with a computing system DIMA compliant to ARINC653 specification, to which the invention is applied; and
Figure 2 is a schematic sequence flow diagram illustrating an example of how a Health Monitor Supervisor (HMS) in a RTOS of a DIMA, is capable to superintend detecting / treating of errors possibly occurring at various levels (HML, MPL and LTL) according to the invention.

Below, are detailed some presently preferred embodiments of the invention. In the figures, the reference 1 generally designates an aircraft. In shown embodiments, the aircraft 1 is a rotary wing aircraft, e.g. a helicopter.

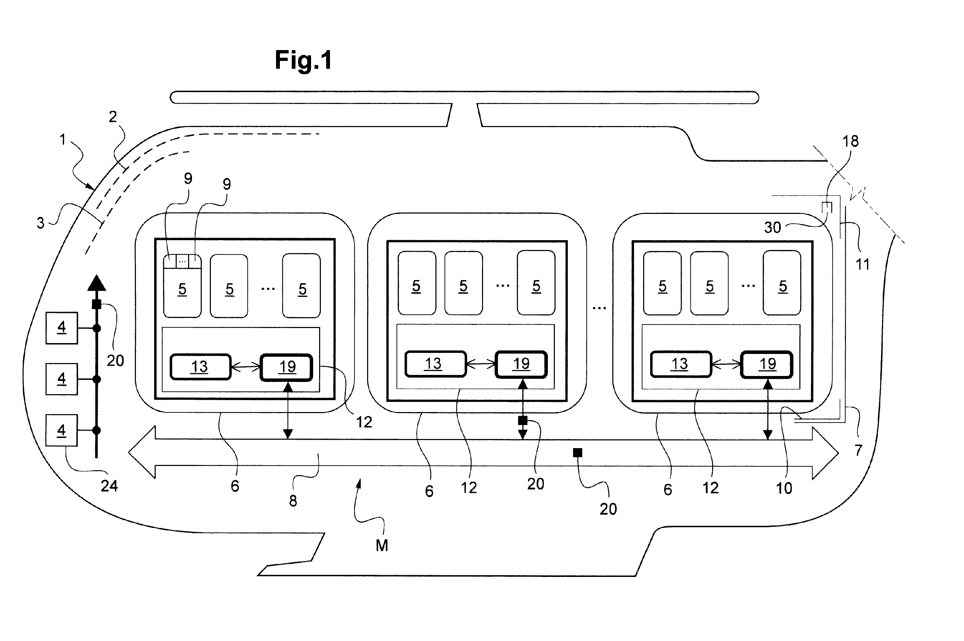

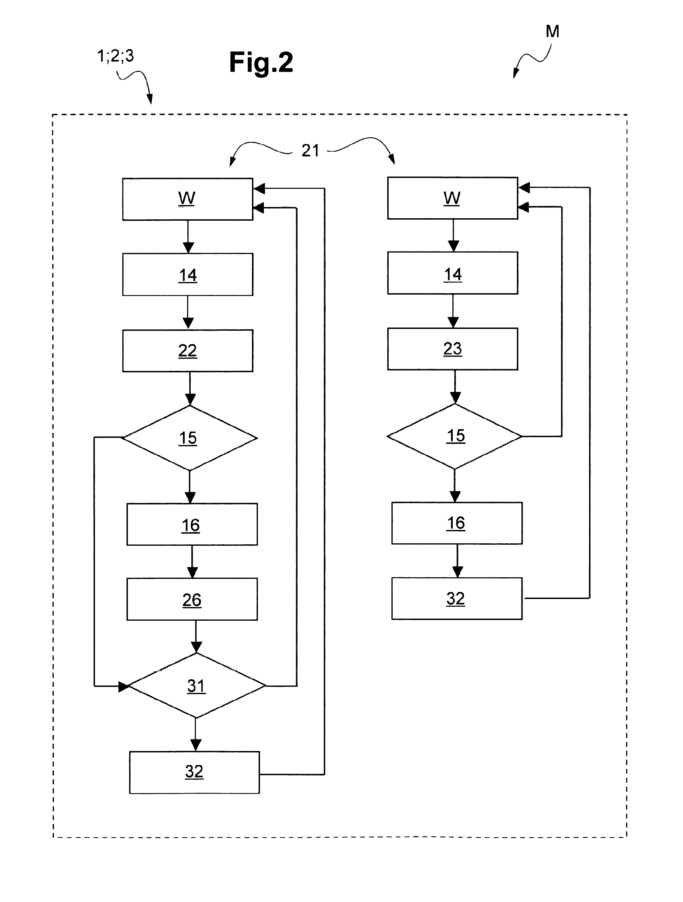

On figures 1 and 2, a method M is executed through automated processing steps / stages / phases / actions with the aid of a computer system 2 onboard the aircraft 1.

In embodiments, the aircraft 1 comprises one or a plurality of onboard computing systems 2. One or a plurality of integrated modular avionics 3 (IMA) are run onboard the aircraft 1. The IMA 3 is compliant to the ARINC653 specification and forms a Distributed Integrated Modular Avionics (DIMA) on board the aircraft 1.

In this DIMA, the onboard computer system 2 comprises: a series of equipments 4. Some of these equipments 4 are Information Exchange Means 24, such as radio, RFID, GPS, UHF transponders or the like, provided onboard the Aircraft 1 for feeding / sending useful information / signals from this Aircraft 1.

The onboard computer system 2 also comprises Partitions 5, at least one Module 6 that contains at least the processing resources (distributed processing means 10) and memory (distributed memory means 11) for executing at least one Partition 5, in this Module 6.

At least one physical cabinet structure 7 forms housing, i.e. an environmental barrier, with at least one hardware Modules 6. The different cabinets 7 that are comprised in the architecture of the DIMA 3 are connected among them by using physical communication means 8 (i.e.: ARINC 429, Ethernet), e.g in the form of an avionics Common Bus.

In the Modules 6, an underlying Real-Time Operating System or RTOS 12 provides common services for small software units called Partitions 5. Partitions 5 are independent one from another, in execution and memory management. Finally, the Partitions 5 are managing various subprocesses called Threads 9. For instance such Threats 9 are of the type of the so-called "processes" as defined in the ARINC653 specification.

Each Cabinet 7 is having a distributed architecture for sharing resources of the processing means 10 and memory means 11.

An underlying Real-Time Operating System or RTOS 12 is installed in each Module 6 so as to provide common services from distributed processing means 10 and memory means 11 to independent Partitions 5. The RTOS 12, also called "core OS" is having a Health Monitor Unit or HMU depicted as 13 on figures 1-2. The HMU 12 is allocated to each Module 6 for:
- an error detection step 14 of detecting errors in the computer system 2;
- a responsive action allocation step 15 of allocating at least one corresponding responsive action 17 predetermined in Health Monitoring Tables 18; and
- a responsive action performing step 16 of executing by the Health Monitoring, the corresponding responsive action(s) 17.

Such a distributed environment with a Health Monitoring is executing such steps 14, 15 and 16 through exchange in the DIMA 3 of Data Messages 20.

Typicaly in DIMAs, such Data Messages 20 are reflecting various types of information, useful to the work for the DIMA 3, e.g. for helping the piloting of the aircraft 1.

Such Message Data Messages 20 are for example reflecting information chosen from: software status, hardware availability, frequency values, sensor measurements values, GPS position and tracking information related to a particular track point. For instance, Data Messages 20 transit from given equipment 4, via the communication means 8 such as a Bus or the like, for e.g. reaching the memory / processing means 10-11 where this Data Messages 20 is used / treated by a Module 6 / Partition 5.

The DIMA 3 in the Computer System 2 of the invention is also having a Health Monitor Supervisor or HMS depicted as 19 on the figures.

As of this HMS 19, the Message Data 20 dispatched in this Computer System 2 are also error messages, i.e. fault messages and / or error responsive messages. Other way speaking, the Data Messages 20 also include error messages reflecting critical information about the DIMA 3.This information is useful to the HMU 13 and HMS 19 and / or produced by such HMU 13 and HMS 19. Some information of this Data Messages 20 is reflecting e.g. software / hardware status / availability.

The Method M of the invention proposes that a Health Monitoring Supervising step 21 which is executed by the HMS 19. The Health Monitoring Supervising Step 21 is implemented in each Module 6. Other way speaking, the HMS 19 is allocated at a so-called RTOS level (RTOS 12 core OS).

Encompassing over the usually defined three (3) distinct working levels in a classical DIMA, the extension formed by the Health Monitor Supervisor 19 provided by the invention, adds such a superintending level called the RTOS level or OSL. The OSL is over / beyond / above the usual three levels (LTL, MPL and HML) to which are tied the classical HMUs.

This means the Health Monitor Supervisor 19 is capable of acting at various levels (LTL, MPL, HML and OSL), independently from the faulty level where the error occurred. Should the faulty level be e.g. LTL, an action can be piloted by the HMS 19 at a different level (e.g. MPL, HML and OSL).

As depicted on figure 2, the HMS 19 is supervising the Health Monitoring in the DIMA 3, by executing various stages examplified now.

Among the stages executed by the HMS 19, the invention provides a Local Information Collecting Stage 22. At this local information collecting stage 22, useful information communicated in the form of Data Messages 20 are collected from the equipments 4, RTOS 12, Cabinets 7, Modules 6 and Threats 9, and fed to the HMS 19, managing the relevant HMUs 13. This local information collecting stage 22 is performed by the HMS 19.

Another of the stages executed by the HMS 19 is providing an External Information Capture stage 23 from equipments 4 forming Information Exchange Means 24 onboard the aircraft 1, by the HMS 19. This allows the Health Monitoring to take into account present situational parameters of operating of the aircraft 1. it is understood that the teerm "external" refers to information coming from the outside of the DIMA 3, this external information being possibly coming from the aircraft 1 or from the outside of the aircraft 1.

For illustrating such situational parameters of the aircraft 1 which are captured during this external information capture stage 23, the external information may be produced or otherway communicated by equipments 4 onboard the aircraft 1. Other external information may provide from the outside of the aircraft 1, such as meteorological data, localization data (GPS, Galileo, Glonass, Compass data), Radio data transfer (Route map or the like), Outside Piloting assistance data (e.g. would the aircraft 1 can behave like / be a drone).

Among external information captured from onboard / outboard the aircraft 1, are e.g. data from sensors, flight assistance, operation environment conditions information -e.g: temperature, pressure, hygrometry, speed, schedule and time, motor functioning data, current gasoline consumption / tank load,

The method M also provides for:
- an Information Treatment Stage 25, by the HMS 19, for calculating relevant health monitoring information based upon the relavant information from collecting stage 22 / capture stage 23, since information is either local information, external information or both.
- a Transmitting Stage 26 of passing from the HMS 19 the relevant health monitoring information (e.g. via Data Messages 20 communicated to the means 8) to at least one local HMU 13 of a local Module 6; and
- based upon the transmited relevant information, at least one Performing Step 16 is executing, via the local HMU, at least one responsive action 17.

Similarly to the classical HMU architecture, the Health Monitoring as per the method M of the invention is executing Responsive Action Allocation Stages 15, through which are decided what is / are the target(s) of the Health Monitoring action 17 relavant in view of the situation. Based on such a Responsive Action Allocation Stage(s) 15, is then usually executed at least one Responsive Action Performing Stage 16.

In some cases, for instance thanks to comparison with information provided to the HMS (e.g. reliable location / status information from an independent equipment 4), the Responsive Action Performing Stage 16 may consist in simply continuing the operation of the Module 6 / Partition 5, e.g. if the HMS 19 allowed to consider that the supposed error / default which has initiated the Health Monitoring routine was irrelevant (e.g. mistaken). Then, the stage 16 may be considered as "void".

In the embodiment of figure 2, the method M comprises, during the transmitting stage 26, a Communicating Phase 27 of connecting the HMS 19 with a plurality of local HMUs 13, via the Physical Communication means 8.

In this embodiment, the method M comprises after the transmitting step 26 of relevant information to local Modules 6, a Recording Relevant Information Stage 28, ordered thanks to the HMS 19. This Stage 28 provokes recording of the relevant information in memory means 11 allocated to the local Module 6 where the local HMU 13 is executing the Responsive Action Performing Stage 16.

Depending on situations, the method M comprises that the Responsive Action Performing Stage 16 is executing recovery actions in at least one of: RTOS 12, Cabinet 7, Module 6, Partition 5 and Threat 9 subprocess, in the Computer system 2.

In an embodiment, the method comprises that the Responsive Action Performing Stage 16 includes an Information Phase 29 of announcing by the HMS 19, outside the local Module 6, to at least one "remote" RTOS 12, Cabinet 7, Module 6, Partition 5 and Threat 9 subprocess, in the Computer system 2, of the executing of the Responsive Action Performing Stage 16 in the local Module 6.

Depending on real-time, environmental, architectural context and on various embodiments, the method M comprises that the Responsive Action Performing Stage 16 is executing in the local Module 6, at least one recovery action of:
- Module 6 shutdown action of the local Module 6 with an information phase of announcing by the HMS, to at least one other Module 6 in the Computer system 2, of the shutdown of the local Module;
- Restoring launch action of the local Module 6; and
- Back-up recording action of recording at least one Partition 5 of the Computer System 2, in at least one memory means 11 allocated to each local Module 6 where the Responsive Action Performing Stage 16 is executed.

Unlike the classical HMUs, each HMS 19 operating as per the method M of the invention is capable of comprising, in the Responsive Action Performing Stage 16, executing at least one recovery action in another Module 6 of the DIMA 3 than the local Module 6 where the initial error occured.

For instance, the method M comprises that the Responsive Action Performing Stage 16 is executing at least one recovery action in another Module 6 than the local Module 6, including a partition stop action / partition launching transfer action to at least one distinct partition 5, of at least one task (or threat 9) previously operated by a stopped partition 5 having been submitted to a partition stop action.

From figure 2, in an embodiment of the method M₁ are exposed two flow charts exemplifying two possible successions of executed through automated processing steps / stages / phases / actions with the aid of a computer system 2 onboard the aircraft 1.

On the left hand branch, the so-called "Local Error" branch involves: a stand-by status W during which the method M is waiting for local error occurrence.

Then, a subsequent step detects that a local error occurs, thus performing the Error Detection Stage 14 in the Health Monitoring Supervising 21, checking for local errors that would have occured.

During a subsequent stage, is executed the Local Information collecting stage 22, performed by the HMS 19 attached to the RTOS 12 managing the Partition 5 where an error / default was detected. So as to know whether or not a recovery action is to be performed, a Responsive Action Allocation Stage(s) 15 is executed. This Responsive Action Allocation Stage(s) 15 involves typically Handlers 30, such as depicted on figure 1.

Should the Responsive Action Allocation Stage(s) 15 determines that indeed, an action is needed, ("Y" = yes option) the method M proceeds to a subsequent step 16. Thus is executed the Responsive Action Performing Stage 16.

Should not the Responsive Action Allocation Stage(s) 15 determines that no action is needed, ("N" = no option) the method M proceeds to another step, for determing whether or not external recovery actions would be needed.

After the the Responsive Action Performing Stage 16 is executed, the method M transmits local information from the local Module 6, thus executing the Transmitting Stage 26.

The yes option then joins the no option. This provides for the method M to proceed to the step 31 of determing whether or not external recovery actions would be needed. At the external recovery actions needed step 31, should such a query be responded to positively, another "yes" option ("Y") is continued. This provokes that the HMS 19 transmits external commands, through a stage 32. This is called a Transmit Command Stage 32.

Alternativelly, should such a query be responded to negatively, the method M returns to the stage W, thus waiting again for error occurrence. When the Transmit Command Stage 32 is executed, then the method M also returns to the stage W.

In figure 2, the rigft hand branch, called "external information" branch also involves a stand-by status W during which the method M is waiting for local error occurrence.

Then, a subsequent step detects that an external information meaning an error / default occurs, thus performing the Error Detection Stage 14 in the Health Monitoring Supervising 21. This version of the Error Detection Stage 14 reacts when external information arrives.

During a subsequent stage, is executed the external Information capture stage 23, performed by the HMS 19 attached to the RTOS 12 managing the Partition 5 where an error / default was detected.

So as to know whether or not a recovery action is to be performed, a Responsive Action Allocation Stage(s) 15 is executed,, determining should an external command has to be executed or not. This Responsive Action Allocation Stage 15 also involves Handlers 30.

Should the Responsive Action Allocation Stage(s) 15 determines that no action is needed, the method M proceeds back to the stage W.

Should the Responsive Action Allocation Stage 15 is determing that an action is needed, the method M proceeds to a subsequent step 16. Thus is executed the Responsive Action Performing Stage 16, provking that the HMS 19 poerforms local recovery action(s).

This provokes that the HMS 19 transmits local information, through a stage 32. This is called a Transmit Command Stage 32.

Applied to a computer system 2 having a DIMA 3 onboard an aircraft 1 including a plurality of HMUs 13 compliant to the ARINC653 specification, the above enlights the purposes of having ibn Modules 6 superintending HMS 19 allowing useful results of the method M.

Should the aircraft 1 be a rotary wing aircraft, as depicted on figure 1, the HMS 19 / method M are furtherly useful, since e.g. rotary wing aircrafts 1 are both highly submitted to drastic security & weight contraints, as well as to antagonistic flight conditions (as in Emergency missions).

Similarly, should the aircraft 1 according to the invention be either a drone and / or compatible with remote control operation (e.g. in cases of hostile drop zone landings), the invention is useful since it allows vital partitions 5 compulsary to good achievement of the current operation, to be maintained, continued via other distributed means, or postponed / deleted, if not relevant at the present moment.

The alphanumeric references used in the description are:

| | | |
|---|---|---|
| 1 | Aircraft | e.g. Rotary Wing |
| 2 | Computer System | Onboard the Aircraft 1 |
| 3 | Distributed Integrated Modular Avionics | DIMA |
| 4 | Equipments (in the Aircraft 1) | e.g. Transponders... |
| 5 | Partitions | Software Units |
| 6 | Modules | In DIMA 3 |
| 7 | Cabinets | In DIMA 3 |
| 8 | Communication Means | For Modules |
| 9 | Threats Sub Processes | Managed by Partitions |
| 10 | Processing Means | Distributed |
| 11 | Memory Means | With Shared Memory |
| 12 | Real-Time Operating System | RTOS |
| 13 | Health Monitor Unit | HMU |
| 14 | Error Detection Stage | In Method M |
| 15 | Responsive Action Allocation Stage | In Method M |
| 16 | Responsive Action Performing Stage | In Method M |
| 17 | Responsive Actions | In Method M |
| 18 | Heath Monitoring Tables | Distributed |
| 19 | Health Monitor Supervisor | HMS at RTOS Level |
| 20 | Data Messages | Used by HMU - HMS |
| 21 | Health Monitoring Supervising Stage | By HMS |
| 22 | Local Information Collecting Stage | By HMS |
| 23 | External Information Collecting Stage | e.g. from Means 24 |
| 24 | Information Exchange Means | Among equipments 4 |
| 25 | Information Treatment Stage | Used by HMU - HMS |
| 26 | Transmitting Stage | In Method M |
| 27 | Communicating Phase | In Method M |
| 28 | Recording Relevant Information Stage | In Method M |
| 29 | Information Phase | In Method M |
| 30 | Handlers | See Stage 15 |
| 31 | External Recovery Actions Needed Step | In Method M |
| 32 | Transmit Command Stage | In Method M |
| M | Health Monitor Supervising Method | Object of Invention |

From the above, it is revealed that the invention provides a Collaborative Health Monitoring in a Distributed Environment. The invention is focused on a HMS 19 in a DIMA 3.

The DIMA 3 is taking advantage of both federated and IMA concepts, as the current aircrafts architectures tend to physically distribute the integrated modules 6 and to connect them with a communicating environment.

In the past, each integrated Module 6 in this distributed architecture includes a "Local" Health Monitor Unit 13 which is used to manage errors not only in its own Module 6, independently of the rest of the DIMA. One action that is carried out in one Module 6 as a consequence of a particular error is transparent to the rest of the Modules in the DIMA. In other words, there is no global view of what is happening in the complete computer system 2. As exposed above, different drawbacks are derived from this fact, which can be summarized in the following ones:
- The highest level to treat an error is at module level;
- The recovery actions executed in a module are just known at module level;
- No visibility at global computer system 2 level;
- Difficult implementation of fault tolerance mechanisms in IMA approach, due to the lack of overviewing system health knowledge;
- Costly redundancy and reconfiguration solutions having to be based exclusively on hardware duplication.

Classical Health Monitor Unit (HMU) is responsible for monitoring and reporting hardware, application and O/S software faults and failures. The classical HMU helps to isolate faults and to prevent failures from propagating. The classical HMU is also responsible for reporting faults to a central aircraft maintenance and display function. Errors may occur at module 6, partition 5 or process level (threats 9). A module level error impacts all partitions 5 within the module 6, whereas a partition level error impacts only one partition 5 (i.e. the very partition 5 where the error is detected). A process level error impacts one or more processes in the partition, or the entire partition 5. Usually, each error is treated at its corresponding level, although an error raised at one level may, due to its nature and scope, propagate to a higher level where it is processed.

The recovery actions are specified for module and partition level errors by configuration of HM tables 18.

Regarding the Tables 18 following are examples of embodiments.

A classical HMU_Tables.xml file with some simple HMU tables 18 is just an example in order to illustrate the prior art and doesn't have to be embodied the same way, by the invention.

This classical HMU table 18 reads:

| |
|---|
| - <HealthMonitor> |
| - <SystemHMTable Name="systemHm"> |
| - <SystemState SystemState="HM_PARTITION_MODE"> |
| <ErrorIDLevel Errorldentifier="HME_DEFAULT" ErrorLevel="HM_PARTITION_LVL" /> |
| </SystemState> |
| - <SystemState SystemState="HM_MODULE_MODE"> |
| <ErrorIDLevel Errorldentifier="HME_DEFAULT" ErrorLevel="HM_MODULE_LVL" /> |
| </SystemState> |
| - <SystemState SystemState="HM_PROCESS_MODE"> |
| <ErrorIDLevel Errorldentifier="HME_DEFAULT" ErrorLevel="HM_PROCESS_LVL" /> |
| </SystemState> |
| </SystemHMTable> |
| - <ModuleHMTable Name="moduleHm"> |
| - <SystemState> |
| <ErrorIDAction ErrorIdentifier="HME_UNKNOWN" ErrorAction="hmDefaultHandler" /> |
| <ErrorIDAction ErrorIdentifier="HME_NUMERIC_ERROR" ErrorAction="" /> |
| <ErrorIDAction ErrorIdentifier="HME_POWER_FAIL" ErrorAction="hmDH_HME_POWER_FAIL" /> |
| <ErrorIDAction ErrorIdentifier="HME_KERNEL" ErrorAction="hmDH_HME_KERNEL" /> |
| <ErrorIDAction ErrorIdentifier="HME_CONFIG_ERROR" ErrorAction="hmDH_EventLog" /> |
| <ErrorIDAction ErrorIdentifier="HME_INIT_ERROR" ErrorAction="hmDH_HME_INIT_ERROR" /> |
| <ErrorIDAction ErrorIdentifier="HME_PARTITION_OVERFLOW" ErrorAction="hmDefaultHandler" /> |
| <ErrorIDAction ErrorIdentifier="HME_PARTITION_MODE_SET" ErrorAction="hmDH_HME_PARTITION_MODE_SET" /> |
| <ErrorIDAction ErrorIdentifier="HME_APEX_INTERNAL_ERROR" ErrorAction="hmDefaultHandler" /> |
| <ErrorIDAction ErrorIdentifier="HME_HM_INTERNAL_ERROR" ErrorAction="hmDefaultHandler" /> |
| <ErrorIDAction ErrorIdentifier="HME_PORT_INTERNAL_ERROR" ErrorAction="hmDefaultHandler" /> |
| <ErrorIDAction ErrorIdentifier="HME_LOST_TICKS" ErrorAction="hmDH_HME_LOST_TICKS" /> |
| <ErrorIDAction ErrorIdentifier="HME_HM_ERROR" ErrorAction="hmDefaultHandler" /> |
| <ErrorIDAction ErrorIdentifier="HME_HMQ_OVERFLOW" ErrorAction="hmDefaultHandler" /> |
| <ErrorIDAction ErrorIdentifier="HME_DATA_LOSS" ErrorAction="" /> |
| <ErrorIDAction ErrorIdentifier="HME_HM_DEADLINE_MISSED" ErrorAction="hmDefaultHandler" /> |
| <ErrorIDAction ErrorIdentifier="HM_MSG" ErrorAction="hmDH_EventLog" /> |
| <ErrorIDAction Errorldentifier="HME_DEFAULT" ErrorAction="hmDefaultHandler" /> |
| </SystemState> |
| <Settings maxQueueDepth="34" queueThreshold="32" stackSize="16384" maxLogEntries="100" logEntriesThreshold="98" attributeMask="0x00000001" notificationHandler="" notifMaxQueueDepth="0" eventFilterMask="0x00000000" maxErrorHandlerQueueDepth="0" errorHandlerQueueThreshold="0" /> |
| </ModuleHMTable> |
| - <PartitionHMTable Name="Hm"> |
| - <SystemState> |
| < ErrorIDAction ErrorIdentifier="HME_UNKNOWN" ErrorAction="hmDefaultHandler" /> |
| <ErrorIDAction ErrorIdentifier="HME_NUMERIC_ERROR" ErrorAction="" /> |
| <ErrorIDAction ErrorIdentifier="HME_POWER_FAIL" ErrorAction="hmDH_HME_POWER_FAIL" /> |
| <ErrorIDAction ErrorIdentifier="HME_KERNEL" ErrorAction="hmDH_HME_KERNEL" /> |
| <ErrorIDAction ErrorIdentifier="HME_CONFIG_ERROR" ErrorAction="hmDH_EventLog" /> |
| <ErrorIDAction ErrorIdentifier="HME_INIT_ERROR" ErrorAction="hmDH_HME_INIT_ERROR" /> |
| <ErrorIDAction ErrorIdentifier="HME_PARTITION_OVERFLOW" ErrorAction="hmDefaultHandler" /> |
| <ErrorIDAction ErrorIdentifier="HME_PARTITION_MODE_SET" ErrorAction="hmDH_HME_PARTITION_MODE_SET" /> |
| <ErrorIDAction ErrorIdentifier="HME_APEX_INTERNAL_ERROR" ErrorAction="hmDefaultHandler" /> |
| <ErrorIDAction ErrorIdentifier="HME_HM_INTERNAL_ERROR" ErrorAction="hmDefaultHandler" /> |
| <ErrorIDAction ErrorIdentifier="HME_PORT_INTERNAL_ERROR" ErrorAction="hmDefaultHandler" /> |
| <ErrorIDAction ErrorIdentifier="HME_LOST_TICKS" ErrorAction="hmDH_HME_LOST_TICKS" /> |
| <ErrorIDAction ErrorIdentifier="HME_HM_ERROR" ErrorAction="hmDefaultHandler" /> |
| <ErrorIDAction ErrorIdentifier="HME_HMQ_OVERFLOW" ErrorAction="hmDefaultHandler" /> |
| <ErrorIDAction ErrorIdentifier="HME_DATA_LOSS" ErrorAction="" /> |
| <ErrorIDAction ErrorIdentifier="HME_HM_DEADLINE_MISSED" ErrorAction="hmDefaultHandler" /> |
| <ErrorIDAction ErrorIdentifier="HM_MSG" ErrorAction="hmDH_EventLog" /> |
| <ErrorIDAction Errorldentifier="HME_DEFAULT" ErrorAction="hmDefaultHandler" /> |
| </SystemState> |
| <Settings maxQueueDepth="34" queueThreshold="32" stackSize="16384" maxLogEntries="100" logEntriesThreshold="98" attributeMask="0x00000001" notificationHandler="" notifMaxQueueDepth="0" eventFilterMask="0xFFFFFFFF" maxErrorHandlerQueueDepth="128" errorHandlerQueueThreshold="126" /> |
| </PartitionHMTable> |
| </HealthMonitor> |

As of the invention, a HMS_Tables.xml file as per the method M, involves simple HMS tables 18 as per the folling example, in order to illustrate the invention.

| |
|---|
| - <HealthMonitor> |
| - <SystemHMTable Name="systemHm"> |
| - <SystemState SystemState="HM_PARTITION_MODE"> |
| <ErrorIDLevel ErrorIdentifier="HME_EUROCOPTER_ERROR" ErrorLevel="HM_MODULE_LVL" /> |
| <ErrorIDLevel Errorldentifier="HME_DEFAULT" ErrorLevel="HM_PARTITION_LVL" /> |
| </SystemState> |
| - <SystemState SystemState="HM_MODULE_MODE"> |
| <ErrorIDLevel ErrorIdentifier="HME_EUROCOPTER_ERROR" ErrorLevel="HM_MODULE_LVL" /> |
| <ErrorlDLevel Errorldentifier="HME_DEFAULT" ErrorLevel="HM_MODULE_LVL" /> |
| </SystemState> |
| - <SystemState SystemState="HM_PROCESS_MODE"> |
| <ErrorlDLevel ErrorIdentifier="HME_EUROCOPTER_ERROR" ErrorLevel="HM_MODULE_LVL" /> |
| <ErrorIDLevel ErrorIdentifier="HME_DEFAULT" ErrorLevel="HM_PROCESS_LVL" /> |
| </SystemState> |
| </SystemHMTable> |
| - <ModuleHMTable Name="moduleHm"> |
| - <SystemState> |
| <ErrorIDAction ErrorIdentifier="HME_EUROCOPTER_ERROR" ErrorAction="hmEurocopterHandler" /> |
| <ErrorIDAction ErrorIdentifier="HME_NUMERIC_ERROR" ErrorAction="" /> |
| <ErrorIDAction ErrorIdentifier="HME_POWER_FAIL" ErrorAction="hmDH_HME_POWER_FAIL" /> |
| <ErrorIDAction ErrorIdentifier="HME_KERNEL" ErrorAction="hmDH_HME_KERNEL" /> |
| <ErrorIDAction ErrorIdentifier="HME_CONFIG_ERROR" ErrorAction="hmDH_EventLog" /> |
| <ErrorIDAction ErrorIdentifier="HME_INIT_ERROR" ErrorAction="hmDH_HME_INIT_ERROR" /> |
| <ErrorIDAction ErrorIdentifier="HME_PARTITION_OVERFLOW" ErrorAction="hmDefaultHandler" /> |
| <ErrorIDAction ErrorIdentifier="HME_PARTITION_MODE_SET" ErrorAction="hmDH_HME_PARTITION_MODE_SET" /> |
| <ErrorIDAction ErrorIdentifier="HME_APEX_INTERNAL_ERROR" ErrorAction="hmDefaultHandler" /> |
| <ErrorIDAction ErrorIdentifier="HME_HM_INTERNAL_ERROR" ErrorAction="hmDefaultHandler" /> |
| <ErrorIDAction ErrorIdentifier="HME_PORT_INTERNAL_ERROR" ErrorAction="hmDefaultHandler" /> |
| <ErrorIDAction ErrorIdentifier="HME_LOST_TICKS" ErrorAction="hmDH_HME_LOST_TICKS" /> |
| <ErrorIDAction ErrorIdentifier="HME_HM_ERROR" ErrorAction="hmDefaultHandler" /> |
| <ErrorIDAction ErrorIdentifier="HME_HMQ_OVERFLOW" ErrorAction="hmDefaultHandler" /> |
| <ErrorIDAction ErrorIdentifier="HME_DATA_LOSS" ErrorAction="" /> |
| <ErrorIDAction ErrorIdentifier="HME_HM_DEADLINE_MISSED" ErrorAction="hmDefaultHandler" /> |
| <ErrorIDAction ErrorIdentifier="HM_MSG" ErrorAction="hmDH_EventLog" /> |
| <ErrorIDAction Errorldentifier="HME_DEFAULT" ErrorAction="hmDefaultHandler" /> |
| </SystemState> |
| <Settings maxQueueDepth="34" queueThreshold="32" stackSize="16384" maxLogEntries="100" logEntriesThreshold="98" attributeMask="0x00000001" notificationHandler="" notifMaxQueueDepth="0" eventFilterMask="0x00000000" maxErrorHandlerQueueDepth="0" errorHandlerQueueThreshold="0" /> |
| </ModuleHMTable> |
| - <PartitionHMTable Name="Hm"> |
| - <SystemState> |
| <ErrorIDAction ErrorIdentifier="HME_UNKNOWN" ErrorAction="hmDefaultHandler" /> |
| <ErrorIDAction ErrorIdentifier="HME_NUMERIC_ERROR" ErrorAction="" /> |
| <ErrorIDAction ErrorIdentifier="HME_POWER_FAIL" ErrorAction="hmDH_HME_POWER_FAIL" /> |
| <ErrorIDAction ErrorIdentifier="HME_KERNEL" ErrorAction="hmDH_HME_KERNEL" /> |
| <ErrorIDAction ErrorIdentifier="HME_CONFIG_ERROR" ErrorAction="hmDH_EventLog" /> |
| <ErrorIDAction ErrorIdentifier="HME_INIT_ERROR" ErrorAction="hmDH_HME_INIT_ERROR" /> |
| <ErrorIDAction ErrorIdentifier="HME_PARTITION_OVERFLOW" ErrorAction="hmDefaultHandler" /> |
| <ErrorIDAction ErrorIdentifier="HME_PARTITION_MODE_SET" ErrorAction="hmDH_HME_PARTITION_MODE_SET" /> |
| <ErrorIDAction ErrorIdentifier="HME_APEX_INTERNAL_ERROR" ErrorAction="hmDefaultHandler" /> |
| <ErrorIDAction ErrorIdentifier="HME_HM_INTERNAL_ERROR" ErrorAction="hmDefaultHandler" /> |
| <ErrorIDAction ErrorIdentifier="HME_PORT_INTERNAL_ERROR" ErrorAction="hmDefaultHandler" /> |
| <ErrorIDAction ErrorIdentifier="HME_LOST_TICKS" ErrorAction="hmDH_HME_LOST_TICKS" /> |
| <ErrorIDAction ErrorIdentifier="HME_HM_ERROR" ErrorAction="hmDefaultHandler" /> |
| <ErrorIDAction ErrorIdentifier="HME_HMQ_OVERFLOW" ErrorAction="hmDefaultHandler" /> |
| <ErrorIDAction ErrorIdentifier="HME_DATA_LOSS" ErrorAction="" /> |
| <ErrorIDAction ErrorIdentifier="HME_HM_DEADLINE_MISSED" ErrorAction="hmDefaultHandler" /> |
| <ErrorIDAction ErrorIdentifier="HM_MSG" ErrorAction="hmDH_EventLog" /> |
| <ErrorIDAction Errorldentifier="HME_DEFAULT" ErrorAction="hmDefaultHandler" /> |
| </SystemState> |
| <Settings maxQueueDepth="34" queueThreshold="32" stackSize="16384" maxLogEntries="100" logEntriesThreshold="98" attributeMask="0x00000001" notificationHandler="" notifMaxQueueDepth="0" eventFilterMask="0xFFFFFFFF" maxErrorHandlerQueueDepth="128" errorHandlerQueueThreshold="126" /> |
| </PartitionHMTable> |
| </HealthMonitor> |

The only difference in HMS_Tables.xml with regard to HMU_Tables.xml is that in the first one (at ModuleHMTable level) there is a new error type and a new handler defined for us:
A peculiar aspect of the HMS table 18 is an additional error type, forming an additional handler 30, e.g:

| |
|---|
| <ErrorIDAction ErrorIdentifier="HME_EUROCOPTER_ERROR" ErrorAction="hmEurocopterHandler"/> |

Regarding some specific embodiments, it is possible to add these additional HM elements by modifying the files, e.g. as: "hmTypes.h" providing definition of additional error types / "hmDefaultHandlers.c" providing definition of additional handlers. For example:

| |
|---|
| STATUS hmEurocopterHandler (HM_EVENT_ID hmEvtld) { |
| // Implementation of the handler |
| return (OK); |
| } |

The instruction HM_EVENT_INJECT() shall be used to raise an error from a partition 5 user application, for example:

| |
|---|
| HM_EVENT_INJECT (HME_EUROCOPTER_ERROR, 0, addInfo, 0, ""); |

Regarding partition level errors, the system integrator defines a Partition HM table for each partition 5. The recovery actions could be: restart (cold or warm start) the partition 5 or stop the partition 5, among others. In the prior art, the system integrator defines the Module HM tables for module level errors, and the recovery actions could be: reset the module or shutdown the module among others.

Unlike the classical HMUs, the invention is establishing a higher recovery level beyond the module level established in IMA architectures. The target of this new recovery level is to avoid the lack of communication between the HM of independent modules that comprise a Distributed Integrate Modular Avionics.

The invention proposes the introduction of a Health Monitor Supervisor (HMS) at System Level with the following objectives:
- Manage a global view of the Health of the System.
- Allow all modules to know the recovery actions that take place in a particular module.
- Allow all modules to react to a particular recovery action that is performed in a particular module.
- System level fault report.

In order to implement this new recovery level, the invention proposes the implementation of a HM System Module allocated at Core Operating System in charge of the following tasks:
- Collecting local information.
- Transmitting local information.
- Collecting external information.
- Performing recovery actions.

Though all the HMU Modules are to be communicated by a physical means, this doesn't need to be described for understanding the invention.

Detailled tasks allocated in the HMS include:
For collecting Local Information, the HMS collect all information of recovery actions taking place in its module, at partition and module level. For example, in case a partition is stopped as a recovery action at partition level the HM System Module should gather this information and manage it.

For transmitting Local Information, the HMS transmit information.

For recovery Actions performed in the local Module, the HMS transmits information about the recovery actions performed in its own Module, in order to inform the rest of physical Modules of what is happening.

This allows the rest of physical Modules to perform the most suitable actions to restore the effect of the initial recovery action.

For example, at module level a shutdown of the module is determined as recovery action. Previously to carry out this action, the HM System Module should inform the rest of the modules that a shutdown will be performed. The rest of HMS, once the information has been received, will be able to launch a particular action to restore as much as possible the initial situation. Subsequently, different recovery actions may be launched in this example; a back-up partition or even a complete set of partitions, in case the architecture is based on back-up modules.

For recovery Actions to be performed in other module(s), the HMS also commands the recovery actions to be performed in a particular physical Module.

For example, at partition level is decided to stop a particular partition. The HM System Module, taking into account the available modules, resources, accessibility of sensors and data, knows that a particular module (module') could execute the same function in a spare partition. Thus, the HM System Module commands the HM System Module in module to launch a particular partition which will assume the same role as the stopped partition.

For collecting External Information, the HMS collects information about the recovery actions that take place in the Distributed Integrated Modular Avionics environment to monitor how the System changes along the execution.

For performing recovery actions, the HMS performs the recovery actions explicitly commanded by external modules or the ones that are considered appropriate to a particular recovery action that has taken place in other module. In both cases, the HMS should inform the rest of physical modules about the corresponding recovery actions, so as to maintain the global view of the system's health.

Some advantages of the invention aree summarized by:
- Have a Health Monitor at System Level, which allow considering the entire system as a whole.
- Recovery actions would not be limited to be executed at module and partition level.
- Recovery actions are carried out taking into account the complete system status.
- Common fault report mean instead of a fault report for module or equipment.
- Fault Tolerance Mechanisms implementation.
- Redundancy managed by the Health Monitor System Module.
- Implementation of reconfiguration, possibility of redistributing some logical element/s over one or more physical elements in case of failure.
- Optimization of physical resources.

The invention is not limited to the embodiments described. Conversely, it includes any equivalents of the described features.

## Claims

1. Health Monitor Supervising or HMS method (M) for a Distributed Integrated Modular Avionics or DIMA (3) onboard an aircraft (1); the DIMA (3) is having a plurality of equipments (4); the method (M) is executed through automated processing steps / stages / phases / actions with the aid of a computer system (2); the computer system (2) is having at least: Cabinets (7), Modules (6), Partitions (6) and Threats subprocesses (9); the Cabinets (7) being connected by physical communication means (8); each Cabinet having distributed processing means (10) and memory means (11); an underlying Real-Time Operating System or RTOS (12) being installed in each Module to provide common services from distributed processing means and memory means to independent Partitions; the RTOS having a Health Monitor Unit or HMU compliant to the ARINC653 specification; the HMU being allocated to each Module for: a detection step of detecting errors in the computer system; an allocation step of allocating at least one corresponding responsive action predetermined in Health Monitoring Tables; and a performing step of executing by the HMU the corresponding responsive action;
**characterized in that** the Method proposes that: a Health Monitoring Supervising step (21) is executed by a Health Monitoring Supervisor (19) implemented in each Module and is allocated at RTOS level; the Health Monitoring Supervisor or HMS is executing at least:
- a local information collecting stage (22) from the RTOS, Cabinets, Modules and Threats subprocesses, by the HMS;
- an external information capture stage (23) from equipments aboard the aircraft, by the HMS;
- a local information / external information treatment stage, by the HMS, for calculating relevant health monitoring information based upon the collected information;
- a transmitting stage of passing from the HMS the relevant health monitoring information to at least one local HMU of a local Module; and
- based upon the transmited relevant information, the performing step is executing by the local HMU, at least one responsive action.

2. Method of claim 1
**characterized in that** the Method comprises, during the transmitting stage, a communicating phase of connecting the HMS with a plurality of local HMUs, via the Physical Communication means.

3. Method of claim 1
**characterized in that** the Method comprises, after the transmitting step of relevant information to local Modules, a stage of recording the relevant information in memory means allocated to the local Module where the local HMU is executing the performing step.

4. Method of claim 1
**characterized in that** the performing step is executing recovery actions in at least one of: RTOS, Cabinet, Module and Threat subprocess, in the Computer system.

5. Method of claim 1
**characterized in that** the performing step includes an information phase of announcing by the HMS, outside the local Module, to at least one RTOS, Cabinet, Module and Threat subprocess, in the Computer system, of the performing step in the local Module

6. Method of claim 5
**characterized in that** the performing step is executing in the local Module, at least one recovery action of:
- Module shutdown action of the local Module with an information phase of announcing by the HMS, to at least one other Module in the Computer system, of the shutdown of the local Module;
- Restoring launch action of the local Module; and
- Back-up recording action of recording at least one Partition of the Computer System, in at least one memory means allocated to each local Module where the performing step is executed.

7. Method of claim 1
**characterized in that** the performing step is executing at least one recovery action in another Module than the local Module.

8. Method of claim 6
**characterized in that** the performing step is executing at least one recovery action in another Module than the local Module, including a partition stop action / partition launching transfer action to at least one distinct partition, of at least one task previously operated by a stopped partition having been submitted to a partition stop action.

9. Computer system (2) having a distributed architecture of DIMA onboard an aircraft (1) **characterized in that** the DIMA (2) which is dedicated for executing the method (M) according to one of claims 1-8 has an HMU compliant to the ARINC653 specification.

10. Aircraft (1) having onboard a computer system (2) according to claim 9, said aircraft (1) being a rotary wing aircraft.
